(19) Europäisches Patentamt
European Patent Office
Office européen des brevets

(11) **EP 3 302 343 B1**

(12) **EUROPÄISCHE PATENTSCHRIFT**

(45) Veröffentlichungstag und Bekanntmachung des Hinweises auf die Patenterteilung:
**16.10.2019 Patentblatt 2019/42**

(21) Anmeldenummer: **16727488.5**

(22) Anmeldetag: **07.06.2016**

(51) Int Cl.:
***A61C 8/00*** *(2006.01)*

(86) Internationale Anmeldenummer:
**PCT/EP2016/062873**

(87) Internationale Veröffentlichungsnummer:
**WO 2016/198385 (15.12.2016 Gazette 2016/50)**

(54) **ZAHNERSATZSYSTEM**

DENTAL PROSTHESIS SYSTEM

SYSTÈME DE PROTHÈSE DENTAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.06.2015 CH 8172015**

(43) Veröffentlichungstag der Anmeldung:
**11.04.2018 Patentblatt 2018/15**

(73) Patentinhaber: **Dentalpoint AG**
**8048 Zürich (CH)**

(72) Erfinder:
• **BOLLETER, Philip**
**8048 Zürich (CH)**
• **WETTSTEIN, Pascal**
**5612 Villmergen (CH)**

(74) Vertreter: **Rentsch Partner AG**
**Bellerivestrasse 203**
**Postfach**
**8034 Zürich (CH)**

(56) Entgegenhaltungen:
EP-A1- 0 535 190    WO-A1-2004/032786
DE-U1- 29 921 193   US-A1- 2003 224 331
US-A1- 2006 216 672  US-A1- 2009 111 072
US-A1- 2015 147 724

**EP 3 302 343 B1**

**Beschreibung**

TECHNISCHES GEBIET

Die Erfindung betrifft ein Zahnersatzersatzsystem, insbesondere ein Zahnersatzsystem mit einer Schraubensicherung.

STAND DER TECHNIK

In der dentalen Implantologie werden nach wie vor hauptsächlich Systeme aus Titan verwendet. Diese bestehen meist aus Implantat, Abutment und Verbindungsschraube. Nach erfolgter Osseointegration des Implantates wird das Abutment mit dem Implantat mittels einer Verbindungsschraube in axialer Richtung mit einem Drehmoment von ca. 20 bis 35 Ncm festgezogen und verbunden. In der Regel weisen Implantat und Abutment sogenannte Positionierflächen auf, welche eine verdrehsichere Verbindung herstellen und zur Sicherung des Abutments gegen auftretende Torsionskräfte während des Kauens dienen. Bei bekannten Titanimplantaten kommt es bedingt durch hohe mechanische Belastungen, die während des Kauens auftreten und der daraus resultierenden Biegemomente, zu einem Verlust an Vorspannkraft an der Verbindungsschraube und in Folge dessen zu einer Lockerung des Abutments bzw. des Sekundärteils. Da der Zugang zum Schraubenkopf meist durch eine zementierte Krone verdeckt ist, muss diese zerstört werden um eine gelockerte Schraube erneut Anziehen zu können. Des Weiteren kann eine langsame und stetige Lockerung der Verbindungsschraube zu einer kontinuierlichen Schädigung des Abutments und des Implantats führen. Um eine Lockerung der Verbindungsschraube bei Systemen aus Titan zu verhindern, kommt nach dem Stand der Technik eine Schraube zum Einsatz, welche einen flachkonisch ausgeformten Schraubenkopf benkopf aufweist. Wird das Abutment im Implantat fixiert, wirkt der flachkonische Schraubenkopf in Verbindung mit einer ebenfalls flachkonisch ausgebildeten Durchgangsbohrung im Abutment als selbsthemmende Schraubverbindung. Einer Lockerung wird auf diese Weise entgegengewirkt.

Als relativ junges Material in der dentalen Implantologie, hat sich gegenüber den bekannten Systemen aus Titan die Hochleistungskeramik Zirkondioxid etabliert. Die aus dem Stand der Technik für Titan bekannte Schraubensicherung mit flachkonischer Schraubenhemmung ist aufgrund der bei dieser Hemmung entstehenden nach aussen gerichteten Kräfte für Keramik nicht geeignet. Darüber hinaus können Zahnersatzsysteme aus Keramik verglichen mit Systemen aus Titan nicht auf Zug beansprucht werden. Lösungen, die ein Lockern von Verbindungsschrauben welche in keramischen Zahnersatzsystemen zum Einsatz kommen, verhindern sollen sind aus dem Stand der Technik bekannt.

Die WO214091346 A2 offenbart eine Schraube zur Fixierung eines Abutments mit einem Implantat. Das Implantat weist eine Innenbohrung mit einem Gewinde auf. Die Schraube ist inkongruent zu diesem Gewinde ausgebildet, insbesondere dann wenn die Schraube aus Kunststoff gefertigt ist. Die Inkongruenz führt dazu, dass zwischen Schraube und Implantatkörper neben dem Einschneiden in den Schraubenkörper (der Implantatkörper und dessen Gewinde sind härter) auch eine Kaltverschweissung entsteht, sodass ein fester Sitz der Schraube gewährleistet ist. Die in der WO214091346A2 beschriebene Verbindung hat den Nachteil, dass um diese Lösen zu können die Schraube ausgebohrt werden muss, da aufgrund der Deformation des Schraubenkörpers ein reversibles Lösen nicht möglich ist.

Die EP2522300A beschreibt ein Abutment zur Aufnahme eines Zahnersatzes, wobei das Abutment aus einem glasfaserverstärktem Harz gefertigt ist. Das Abutment weist ein Verbindungselement auf, welches in einer bevorzugten Ausführungsform in das Implantat eingeschraubt wird. Das Implantat kann dabei wahlweise aus Titan, Edelstahl, Keramik oder einem anderen Material zur Osseointegration in einen Kieferknochen bestehen. Durch das für das Abutment verwendete Material sollen Kaukräfte bestmöglich absorbiert und dadurch das Bruchrisiko minimiert werden. Um die Stabilität des Zahnersatzsystems zu erhöhen, wird die Verwendung eines Kunststoffzements vorgeschlagen. Nicht eingegangen wird auf die Problematik, dass aufgrund der verschiedenen Materialien, welche für Abutment und Implantat zum Einsatz kommen, eine erhöhte Wahrscheinlichkeit besteht, dass es über die Tragedauer des Zahnersatzsystems zu Lockerung der Verbindungsschraube kommen kann.

Die US 2003/0224331 A1 offenbart eine Halteschraube zur Befestigung von Dentalkomponenten, wie z.B. Abutments, Kappen und Prothesen an Zahnimplantaten. Die Schraube verfügt über einen Verriegelungsmechanismus, welcher dazu eingerichtet ist das Lösen der Halteschraube bei Schwingungen zu verhindern. Der Verschlussmechanismus umfasst ein Verriegelungselement und im Kopf der Halteschraube befindliche Vorspannelemente.

DARSTELLUNG DER ERFINDUNG

Aufgabe der vorliegenden Erfindung ist es ein Zahnersatzsystem zur Verfügung zu stellen, welches die Nachteile des Standes der Technik nicht aufweist. Es ist eine weitere Aufgabe des erfindungsgemässen Zahnersatzsystems, ein Lockern des Abutments im Keramikimplantat über die Tragedauer hinweg zu verhindern.

Diese Aufgabe wird durch die Merkmale des Anspruch 1 und die abhängigen Patentansprüche gelöst.

Ist im Folgenden von einer Schrauben, welche dazu dient das Abutment im Implantat zu fixieren die Rede, so ist eine permanente im Mund des Patenten verbleibende Schraube gemeint, welche einer dauerhaften Beanspruchung durch Kaukräfte ausgesetzt ist.

Zur Lösung der gestellten Aufgaben, wird erfindungsgemäss ein Zahnersatzsystem vorgeschlagen, welches ein Keramikimplantat zur Osseointegration in einen Kieferknochen mit einer Aufnahmeöffnung für eine Verbindungsschraube aus faserverstärktem Thermoplast zur Befestigung des Abutments aufweist. Das erfindungsgemässe Zahnersatzsystem umfasst eine Schraubensicherung, wobei die Schraubensicherung ein erstes Formschlussmittel und ein zweites Formschlussmittel aufweist, wobei das erste Formschlussmittel an der Verbindungsschraube, das zweiten Formschlussmittel in der Aufnahmeöffnung des Implantats und/oder am Abutment angeordnet ist. Beim Anziehen oder Lösen der Verbindungsschraube ist das erste Formschlussmittel in Kontakt mit dem zweiten Formschlussmittel elastisch verformbar.

Bedingt durch die elastische Verformbarkeit des ersten Formschlussmittels und dessen Fertigung auf Übermass, komprimiert und entspannt sich dieses beim Anziehen oder Lösen der Verbindungsschraube im Zusammenwirken mit dem zweiten Formschlussmittel. Bei der elastischen Verformbarkeit sind allfällig wirkende Torsionskräfte vernachlässigbar gering.

Während des Anziehens bzw. des Lösens der Verbindungsschraube ist es erforderlich, Kompressionskräfte zu überwinden. Es wurde festgestellt, dass das Drehmoment welches zu einem Initialen Lösen der Verbindungsschraube benötigt wird, grösser ist als das maximale Anziehmoment welches zum Festziehen aufzubringen ist. Mit dem erfindungsgemässen Zahnersatzsystem kann einem Verlust an Vorspannkraft an der Verbindungsschraube entgegen gewirkt werden.

Eine bevorzugte Endposition der Verbindungsschraube bzw. des ersten Formschlussmittels ist als jene Position zu verstehen, in welcher das erste Formschlussmittel in das zweite Formschlussmittel vollständig einrastet. Unmittelbar vor Erreichen der Endposition ist die Verbindungsschraube mit dem gewünschten maximalen Anziehmoment beaufschlagt. Unmittelbar nach Erreichen dieses maximalen Anziehmoments, rastet das erste Formschlussmittel in das zweite Formschlussmittel ein und das Anziehmoment sinkt.

Eine weitere Endposition, welche von der bevorzugten Endposition abweicht, ist als jene Position zu verstehen, in welcher das gewünschte maximale Anziehmoment an der Verbindungsschraube unmittelbar wirkt und die ersten Formschlussmittel im Zusammenwirken mit den zweiten Formschlussmittel komprimiert sind.

In einer Ausführungsform ist das erste Formschlussmittel relativ zum zweiten Formschlussmittel drehbar. Beim Erreichen einer ersten Drehposition wird das erste Formschlussmittel im Zusammenwirken mit dem zweiten Formschlussmittel komprimiert und beim Erreichen eines zweiten Drehposition entspannt. In einer Endposition rastet das erste Formschlussmittel in das zweite Formschlussmittel voll ständig ein.

In einer bevorzugten Ausführungsform ist das erste Formschlussmittel als ein Aussenmehrkant an der Verbindungsschraube und das zweite Formschlussmittel, als Innenmehrkant vorzugsweise ein Dreikant, in der Aufnahmeöffnung des Implantats ausgebildet. Beim Aufbringen eines Anziehmoments auf die Verbindungsschraube werden die Kantenbereiche des Aussenmehrkants, welche in Kontakt mit den Seitenflächen des Innenmehrkants stehen elastisch verformt. Trifft beim Aufbringen des Anziehmoments der Verbindungsschraube der Kantenbereich des Aussenmehrkants auf die Seitenfläche des Innenmehrkant wird dieser komprimiert. Wird das Aufbringen des Anziehmoments fortgesetzt, dreht der Aussenmehrkant im Innenmehrkant in eine Position in welcher die Seitenflächen des Aussenmehrkants auf die Seitenflächen des Innenmehrkants treffen. Die Kantenbereiche des Aussenmehrkants entspannen. Ein solches Entspannen tritt beispielsweise in der Endposition ein wenn der Aussenmehrkant in den Innenmehrkant vollständig einrastet. Kurz vor dem Einrasten wird das gewünschte maximale Anziehmoment erreicht, welches beim Einrasten entsprechend sinkt.

Der Aussenmehrkant, vorzugsweise ein Polygon, ist bezogen auf den Innenmehrkant, vorzugsweise ein Dreikant, vorzugsweise mit Übermass gefertigt. Insbesondere die Kantenbereiche des Aussenmehrkants werden beim Aufbringen des Drehmoments komprimiert und wieder entspannt. Der Aussenmehrkant darf daher bezogen auf den Innenmehrkant ein gewisses Mass nicht überschreiten, da es ansonsten zu einer Schädigung des faserverstärkten thermoplastischen Materials kommt.

In einer bevorzugten Ausführungsform ist der Innenmehrkant im Implantat ein Dreikant. Im nachfolgenden Bespiel wird von einem Innkreisradius des Innendreikants von

$$r_{ID} = 0.85 \text{ mm}$$

ausgegangen.

Für die nachfolgenden Formeln, mit welchen der Aussenkreisradius sowie der Innenkreisradius eines Aussenmehrkants berechnet werden können, bei dem der faserverstärkte Thermoplast maximal komprimiert wird aber noch nicht bricht, werden folgende Annahmen getätigt:

1. Die Verbindungsschraube dehnt sich in axialer Richtung nicht wegen der Faserverstärkung
2. Das Material wird lediglich komprimiert, Scher- und Torsionskräfte werden ignoriert
3. Die Fasern haben keinen Einfluss auf das elastische, radiale Kompressionsverhalten der Matrix
4. Material verhält sich radial gleich unter Zug und Druck

Für den Aussen- und Innenkreisradius ergeben sich daher folgende mathematische Zusammenhänge:

$$r_{ak} = \varepsilon_{Max} \times r_{ID} + r_{ID} = r_{Impl}(\varepsilon_{Max} + 1) = r_{ID}\left(\left|\frac{\sigma_C}{E}\right| + 1\right)$$

$$r_{ik} = \cos(\alpha) \times r_{ak} = \cos\left(\frac{360°}{2n}\right) \times r_{ID}\left(\left|\frac{\sigma_C}{E}\right| + 1\right)$$

$r_{ak}$= Aussenkreisradius Aussenmehrkant an der Verbindungsschraube

$r_{ID}$= Innenradius des Dreikants im Implantat $\varepsilon_{Max} = \left|\frac{\sigma_C}{E}\right|$ ...Maximale Kompression nach dem Hook'schen Gesetz

$\sigma_c$ = Schubspannung

E= E-Modul

n = Anzahl der Kanten des Aussenmehrkants

$r_{ik}$ = Innkreisradius

Für das nachfolgende Berechnungsbeispiel wird für von einem faserverstärktem Thermoplasten mit einer PEEK-Matrix ausgegangen mit einer Druckfestigkeit von 118 MPa und einem E-Modul von 4 GPa. Nach dem Hook'schen Gesetz und der vorgängig genannten Formel für den Aussenkreisradius ergibt sich folgender Wert:

$$r_{ak} = 0{,}875 \text{ mm}$$

Der Innenkreisradius und der Durchmesser des Aussenmehrkants ist abhängig von der Anzahl der Kanten des Aussenmehrkants (n). Für einen Aussenmehrkant mit n = 3 bis n = 12 ergeben sich für den Innenkreisradius und Durchmesser folgende Werte:

| n | 3 | 4 | 5 | 6 | 7 | 8 | 9 | 10 | 11 | 12 |
|---|---|---|---|---|---|---|---|---|---|---|
| Winkel $\alpha$ | 60 | 45 | 36 | 30 | 25.7 | 22.5 | 20 | 18 | 16.4 | 15 |
| r_ik | 0.44 | 0.62 | 0.71 | 0.76 | 0.79 | 0.81 | 0.82 | 0.83 | 0.84 | 0.85 |
| d_ik | 0.88 | 1.24 | 1.42 | 1.52 | 1.58 | 1.62 | 1.64 | 1.66 | 1.68 | 1.7 |

In einer bevorzugten Ausführungsform ist der Aussenmehrkant an der Verbindungsschraube an einem Schraubenende, gegenüberliegend zum Schraubenkopf angeordnet. Es besteht beispielsweise auch die Möglichkeit den Aussenmehrkant direkt im Anschluss an den Schraubenkopf also zwischen Schraubenkopf und Gewinde zu positionieren. In einer weiteren bevorzugten Ausführungsform der Erfindung sind die Verbindungsschraube und das Abutment einstückig aus faserverstärktem Thermoplast gefertigt. Verbindungsschraube und Abutment bilden einen Teil. Die Formschlussmittel sind in dieser Ausführungsform an der Verbindungsschraube angeordnet. Das Abutment weist keine Durchgangsbohrung auf.
In einer weiteren bevorzugten Ausführungsform des erfindungsgemässen Zahnersatzsystem ist das erste Formschlussmittel am Schraubenkopf angeordnet und das zweite Formschlussmittel in einer Durchgangsbohrung des Abutments. In einer solchen Anordnung umfasst das erste Formschlussmittel beispielsweise mindestens eine Rippe und das zweite Formschlussmittel mindestens eine Nut. Die mindestens eine Rippe verläuft an einer äusseren Umlauffläche des Kopfes der Verbindungsschraube und die mindestens eine Nut an einer inneren Umlauffläche der Durchgangsbohrung. Trifft beim Aufbringen des Anziehmoments die mindestens eine Rippe auf die mindestens eine Nut, entspannt die Rippe und rastet in die Nut ein. In jenen Bereichen der Durchgangsbohrung in denen keine Nut angeordnet ist, wird die Rippe beim Drehen der Schraube komprimiert.

In einer bevorzugten Ausführungsform ist die mindestens eine Rippe an einer äusseren Umlauffläche des Kopfes der Verbindungsschraube und die mindestens eine Nut an einer inneren Umlauffläche der Durchgangsbohrung angeordnet. Die Rippen und die Nuten verlaufen vorzugsweise wendeiförmig. In einer weiteren Ausführungsform verläuft die mindestens eine Rippe in axialer Richtung zu einer Vertikalachse der Verbindungsschraube gesehen und die mindestens eine Nut in axialer Richtung zu einer Vertikalachse des Abutments.

In einer weiteren bevorzugten Ausführungsform weist die äussere Umlauffläche der Schraube Nuten auf, in die in Rippen der inneren Umlauffläche der Aufnahmeöffnung formschlüssig eingreifen.

In einer weiteren bevorzugten Ausführungsform ist das zweite Formschlussmittel eine Struktur, welche an einer inneren Umlauffläche der Durchgangsbohrung des Abutments angeordnet ist. Diese Struktur weist Vorsprünge vorzugsweise Zähne auf. Die korrespondierenden ersten Formschlussmittel befinden sich vorzugsweise am Kopf der Verbindungsschraube.

In bevorzugten Ausführungsformen weist das erfindungsgemässe Zahnersatzsystem, insbesondere die Ausnahmeöffnung des Keramikimplantats einen Abschnitt auf, welcher als Passzylinderbohrung ausgebildet ist. Die Passzylinderbohrung ist in axialer Richtung zu ihrer Rotationsachse von einem Innengewinde überlappt. Die Verbindungsschraube weist einen zur Passzylinderbohrung korrespondierenden Passzylinder und ein zum Innengewinde korrespondierendes Aussengewinde auf, sodass zwischen Verbindungsschraube und Aufnahmeöffnung des Implantats ein Passsitz und/oder eine Gewindeverbindung gebildet werden.

In einer bevorzugten Ausführungsform weist die Passzylinderbohrung einen zylindrischen Anteil von 20% bis 50%, gemessen an der zylindrischen Mantelfläche der Passzylinderbohrung auf.

In allen Ausführungsformen ist die Verbindungsschraube aus einem faserverstärkten Thermoplasten gefertigt. Bei den Verstärkungsfasern handelt es sich beispielsweise um folgende Fasen: Kohlefaser, Aramidfaser, Glasfaser, Carbon Nano Tubes oder Kombinationen daraus.

In einer besonders bevorzugten Ausführungsform besteht der faserverstärkte Thermoplast aus unidirektionalen Kohlefasern in einer PEEK-Matrix.

In jenen Ausführungsformen in welchen das zweite Formschlussmittel in der Durchgangsbohrung des Abutments und das erste Formschlussmittel an der Verbindungsschraube angeordnet ist, ist an einer Kontaktfläche zwischen dem Abutment und einem distalen Ende des Implantats eine Verdrehsicherung vorgesehen, welche eine drehstabile Positionierung des Abutments sicherstellt.

In jenen Ausführungsformen in welchen das zweite Formschlussmittel in der Aufnahmeöffnung des Implantats und das erste Formschlussmittel an der Verbindungsschraube angeordnet ist, ist an einer Kontaktfläche zwischen dem Abutment und einem distalen Ende des Implantats eine Verdrehsicherung vorgesehen, welche eine drehstabile Positionierung des Abutments sicherstellt.

KURZE ERLÄUTERUNG ZU DEN FIGUREN

Die Erfindung soll nachfolgend anhand von Ausführungsbeispielen im Zusammenhang mit der Zeichnung näher erläutert werden. Es zeigen:

Fig. 1(a)　　eine Seitenansicht auf das Zahnersatzsystem mit Implantat und ein Abutment (Verbindungsschraube und Schraubensicherung nicht sichtbar),

Fig. 1(b)　　einen Längsschnitt entlang der vertikalen Achse A-A durch eine Ausführungsform des erfindungsgemässen Zahnersatzsystems mit Schraubensicherung,

Fig. 1(c)　　einen Querschnitt durch ein Zahnersatzsystem gemäss Fig. 1(a) entlang der Achse B-B in einer Ansicht von oben,

Fig. 2(a)　　eine Ausführungsform einer Verbindungsschraube in einer Ansicht von seitlich,

Fig. 2(b)　　die Verbindungsschraube aus Fig.2(a) in einer perspektivischen Ansicht von schräg unten,

Fig. 3(a)　　eine perspektivische Ansicht einer Ausführungsform, wobei Abutment und Verbindungsschraube einstückig ausgebildet sind,

Fig. 3(c)    offenbart eine weitere perspektivische Ansicht von schräg oben der Ausführungsform aus Fig.3(a) von schräg unten,

Fig. 3(d)    die Ausführungsform aus Fig.3(a) in einer Ansicht von der Seite

Fig. 4    vier Ansichten (a-d) einer weiteren erfindungsgemässen Ausführungsform, eine Variante des Abutments mit Durchgangsbohrung,

Fig. 5    vier Ansichten (a-d) einer weiteren erfindungsgemässen Ausführungsform, einer weiteren Variante des Abutments mit Durchgangsbohrung,

Fig. 6(a)    eine perspektivische Ansicht des Zahnersatzsystems mit einem Abutment aus Fig. 5(a),

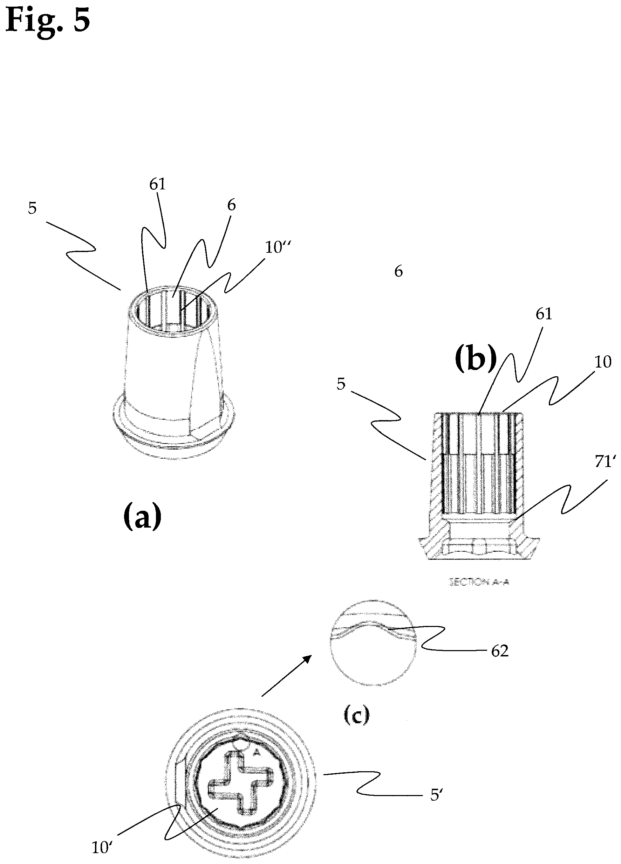

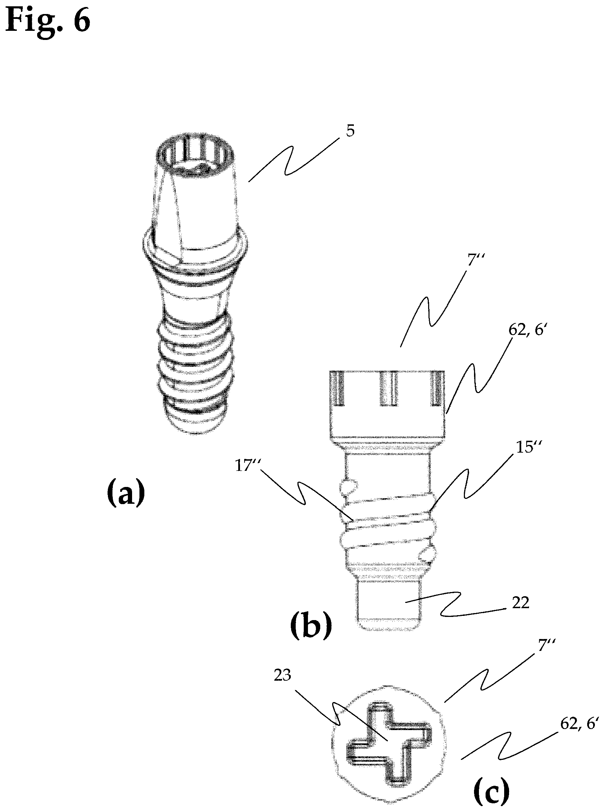

Fig. 6    zwei Ansichten (b-c) einer Ausführungsform einer Verbindungsschraube, wobei die Verbindungsschraube beim Abutment dargestellt in Fig. 5 zum Einsatz kommt,

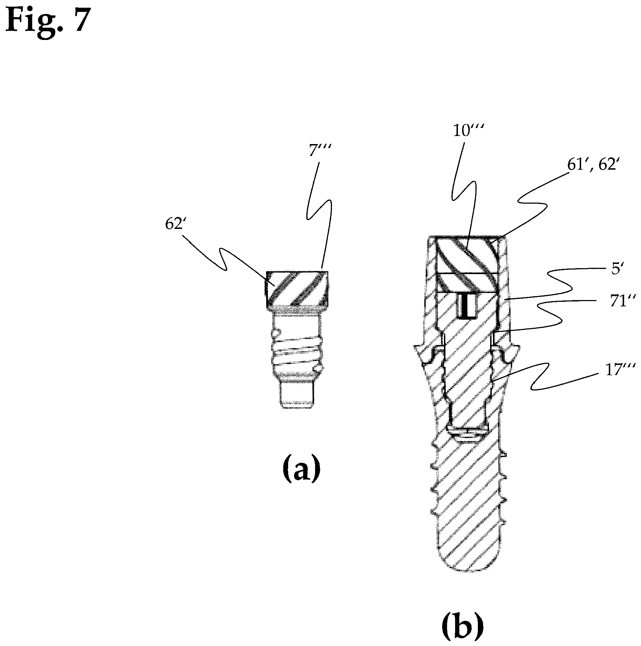

Fig. 7(a)    eine seitliche Ansicht auf eine weitere Ausführungsform einer Schraube für das erfindungsgemässe Zahnersatzsystem,

Fig. 7(b)    einen Längsschnitt durch eine Ausführungsform der Erfindung, wobei die Schraube aus Fig. 7(a) bei der Verbindung des Abutments mit dem Implantat zum Einsatz kommt,

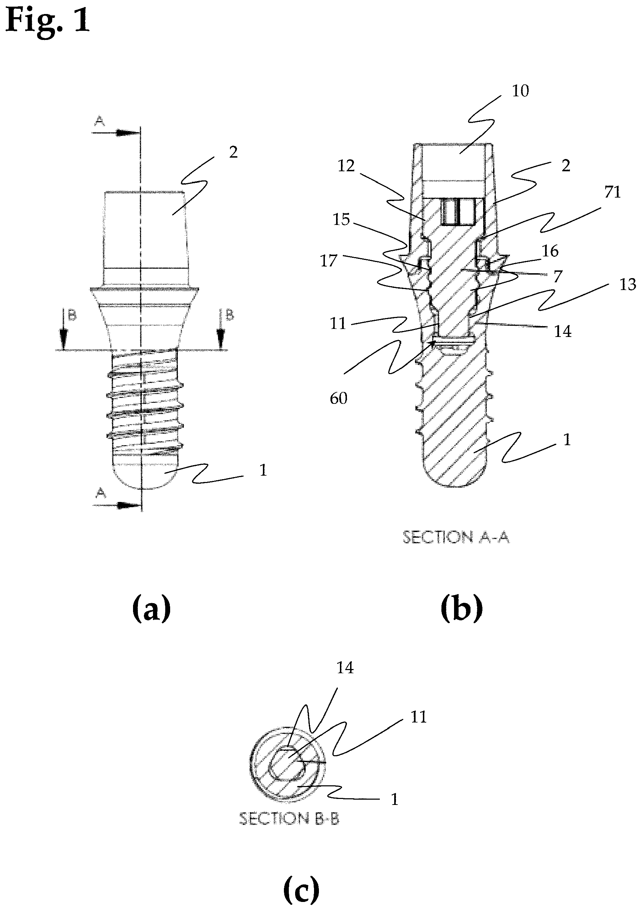

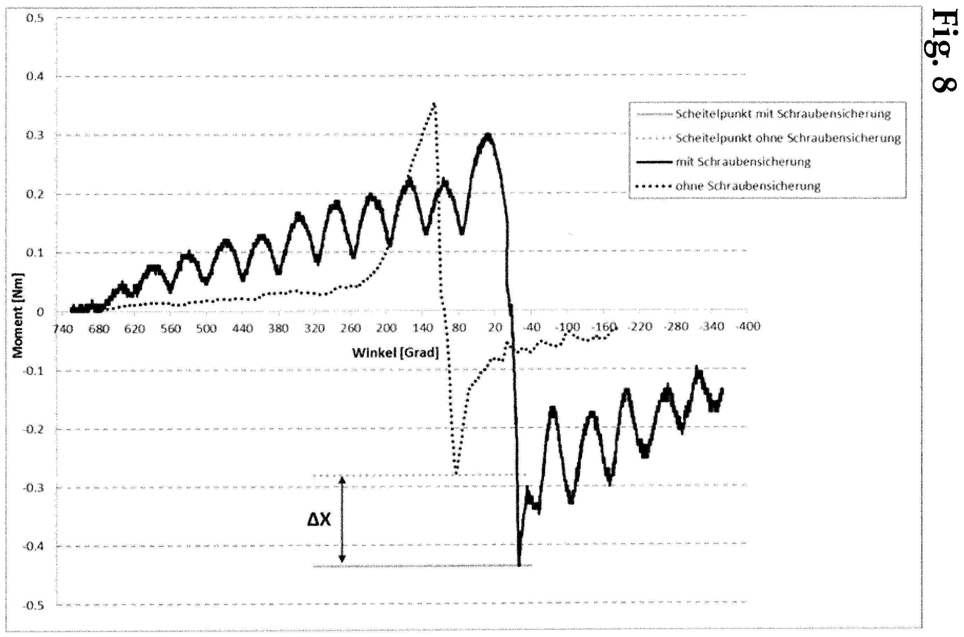

Fig. 8    ein Diagramm des graphischen Verlauf des Anziehmoments und des Lösemoments in Abhängigkeit vom Drehwinkel beim Anziehen bzw. beim Lösen der Verbindungsschraube im ein Vergleich mit und ohne Schraubensicherung gemäss der Ausführungsform der Fig.1,

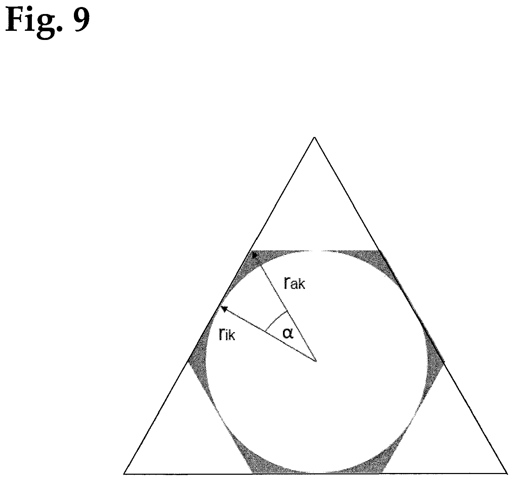

Fig. 9    schematisch zur Erläuterung der Formel für Innenkreisradius und Aussenkreisradius ein Dreieck, welches den Innendreikant und einen Sechskant, welcher den Aussenmehrkant symbolisiert.

## WEGE ZUR AUSFÜHRUNG DER ERFINDUNG

Figur 1(a) zeigt eine Seitenansicht erste Ausführungsform des erfindungsgemässen Zahnersatzsystems umfassend ein Implantat 1 und ein Abutment 2, welches eine Durchgangsbohrung 10 zur Aufnahme einer Verbindungsschraube 7 aufweist. Die Verbindungsschraube und die Durchgangsbohrung sind in Figur 1(a) nicht sichtbar. Das Implantat 1 und das Abutment 2 sind aus einem keramischen Werkstoff, vorzugsweise Zirkonoxid, gefertigt.

Figur 1(b) zeigt eine Schnittdarstellung entlang der Achse A-A der Ausführungsform aus Figur 1 (a). Gezeigt werden das Abutment 2 mit der Durchgangsbohrung 10, das Implantat 1 und eine bevorzugte Ausführungsform der Verbindungsschraube 7. Die Verbindungsschraube 7 ist aus einem thermoplastischen faserverstärktem Material gefertigt. In der dargestellten bevorzugten Ausführungsform befindet sich der Aussenmehrkant 11 am proximalen Ende der Verbindungsschraube 7. Der Aussenmehrkant 11 ist, verglichen mit einem Innenmehrkant 13, welcher in einer Aufnahmeöffnung 14 des Implantats 1 angeordnet ist auf Übermass gefertigt. Beispielsweise weisst der Innenkreisdurchmesser des Innenmehrkants 13 einen Wert von 1,7 mm auf. Der Aussenkreisdurchmesser des Aussenmehrkants 11 wird darauf angepasst mit 1,8 bis 1,9 mm bemessen.

In der dargestellten Ausführungsform ist der Innenmehrkant 13, als Dreikant ausgeführt und im proximalen Bereich der Aufnahmeöffnung 14 des Implantats 1 angeordnet. Die Schraubensicherung 60 wird durch das Zusammenwirken des Aussenmehrkants 11 an der Verbindungsschraube 7 und des Innenmehrkants 13 gebildet. Die Fertigung der Verbindungsschraube 7 auf Übermass bewirkt eine Presspassung. Beim Eindrehen bzw. beim Lösen des Aussenmehrkants 11 im Innenmehrkant 13 kommt es zu einer elastischen Verformung des thermoplastischen faserverstärkten Materials des Aussenmehrkants 11. Beim Anlegen des gewünschten Drehmoments an die Verbindungsschraube 7, werden die Kantenbereiche des Aussenmehrkants 11 elastisch verformt und rasten in einer gewünschten Endposition im Innenmehrkant 13 der Aufnahmeöffnung 14 vollständig ein.

In der in Figur 1(b) dargestellten Ausführungsform ist die Endposition erreicht, wenn der Kopf 12 der Verbindungsschraube 7 an einem an einer Innenseite der Durchgangsbohrung umlaufenden Schulter 71 aufliegt.

Die Verbindungsschraube 7 ist dann gegen ein ungewolltes Lösen oder Lockern gesichert und ein Verlust an Vorspannkraft wird verhindert. Des Weiteren umfasst die Verbindungsschraube 7, in einer bevorzugten Ausführungsform einen Passzylinder 15, welcher von einem Aussengewinde 17 überlapp wird. Ein Abschnitt 16 der Aufnahmeöffnung 14 ist als eine Passzylinderbohrung ausgebildet, wobei entlang der Mantelfläche der Passzylinderbohrung ein Innengewinde verläuft, sodass zwischen Verbindungsschraube 7 und dem Abschnitt 16 ein Passsitz und/oder eine Gewindeverbindung gebildet wird.

Figur 1(c) zeigt eine Schnittdarstellung entlang B-B gemäss der Ausführungsform aus Figur 1(a). Gezeigt wird ein Querschnitt durch die Aufnahmeöffnung 14 des Implantats 1 im Bereich des Innenmehrkants 13, und ein Querschnitt durch den Aussenmehrkant 11. In Figur 1(c) ist der Aussenmehrkant 11 im Innenmehrkant 13 vollständig in der Endposition eingerastet, drei Seitenflächen des Aussenmehrkants liegen parallel zu den Seiten des Innendreikants. Diese Seitenflächen liegen an den Seiten des Innendreikants an. Wie zu Fig. 1(b) bereits erwähnt, liegt der Kopf 12 der Verbindungsschraube 7 an einem an einer Innenseite der Durchgangsbohrung umlaufenden Schulter 71 auf.

Die Verbindungsschraube 7 ist gegen ein Verdrehen und damit ein ungewolltes Lockern gesichert. In der dargestellten Ausführungsform ist der Innenmehrkant 13 als Dreikant und der Aussenmehrkant 11 als Sechskant ausgebildet.

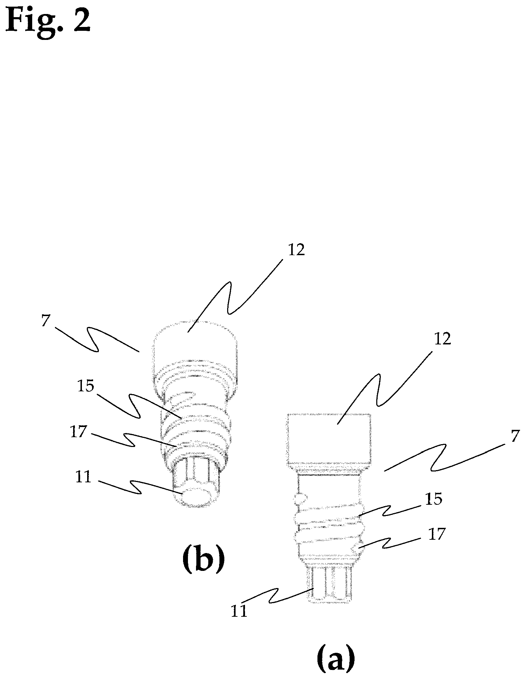

Figur 2(a) und (b) offenbaren zwei Ansichten der Verbindungsschraube 7 gemäss der Ausführungsform aus der Figur 1. Die Verbindungsschraube 7 zeigt den Aussenmehrkant 11, welcher als Sechskant ausgebildet und am proximalen Ende der Verbindungsschraube 7 angeordnet ist. Zwischen dem Schraubenkopf 12 und dem Aussenmehrkant 11 befindet sich der Passzylinder 15, welcher vom Aussengewinde 17 überlappt wird.

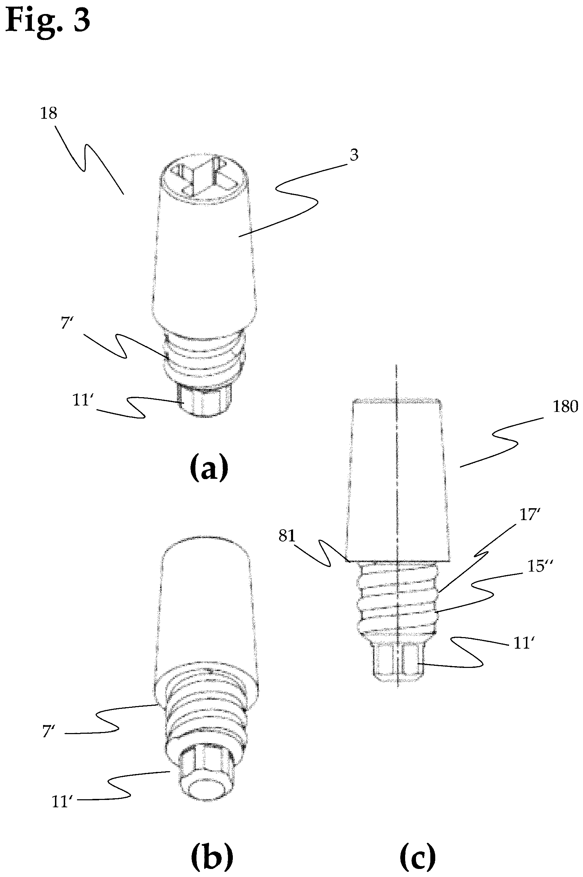

Figur 3 a-c zeigen drei Ansichten einer weiteren erfindungsgemässen Ausführungsform. Das Abutment 3 ist einstückig mit der Verbindungsschraube 7' ausgeführt. Verbindungsschraube 7' und Abutment 3 bilden ein Sekundärteil 180 zur Aufnahme eines Zahnersatzes, beispielsweise einer Krone oder einer Brücke. In der dargestellten Ausführungsform sind Passzylinder, Aussengewinde und Formschlussmittel vergleichbar ausgeführt in Figuren 2(a), (b) dargestellt. Am proximalen Ende ist ein Aussenmehrkant 11', in Form eines Sechskant angeordnet. Im Anschluss daran befindet sich in distaler Richtung ein Passzylinder 15' mit einem Aussengewinde 17'. In der gezeigten Ausführungsform ist das Sekundärteil 180 aus einem thermoplastischen faserverstärkten Kunststoff und das Implantat 1' ist aus einem keramischen Werkstoff gefertigt (Das Implantat 1' ist in Figur 3 a-c nicht gezeigt). Der Aussenmehrkant 11' greift bei der Verbindung des Sekundärteils 180 mit einem Implantat in einen korrespondierenden Innenmehrkant angeordnet in der Aufnahmeöffnung des Implantats ein. Der Aussenmehrkant 11', welcher auf Übermass gefertigt ist, verformt sich elastisch beim Eindrehen in den Innenmehrkant 13'. Beim Anlegen eines Drehmoments an das Sekundärteil 180 werden der Kantenbereich des Aussenmehrkants 11' entsprechend komprimiert sowie entspannt und rasten vollständig in einer gewünschten Endposition im Innenmehrkant 13' ein. In der vorliegenden Ausführungsform wird die Schraubensicherung 70 durch das Zusammenwirken des Aussenmehrkants 11' an der Verbindungsschraube 7' und dem Innenmehrkant 13' gebildet. Die Verbindung Sekundärteil 180 mit Implantat 1' ist auf diese Weise gegen ein Verdrehen und damit gegen eine ungewollte Lockerung abgesichert. Ein Verlust an Vorspannkraft wird verhindert.

Beim Einschrauben des Abutment gemäss der in Figur 3 dargestellten Ausführungsform wird die Endposition beispielsweise dann erreicht, wenn der Aussenmehrkant 11' an einer Grundfläche des Innenmehrkants 13' aufliegt (in Figur 3 nicht gezeigt).

Eine weitere Möglichkeit die Endposition zu Erreichen ist das Aufliegen der Abutmentschulter 81 am distalen Ende des Implantats. Der Aussenmehrkant 11' liegt nicht auf der Grundfläche des Innenmehrkants 13' auf. er ist freigestellt (In Figur 3 nicht gezeigt).

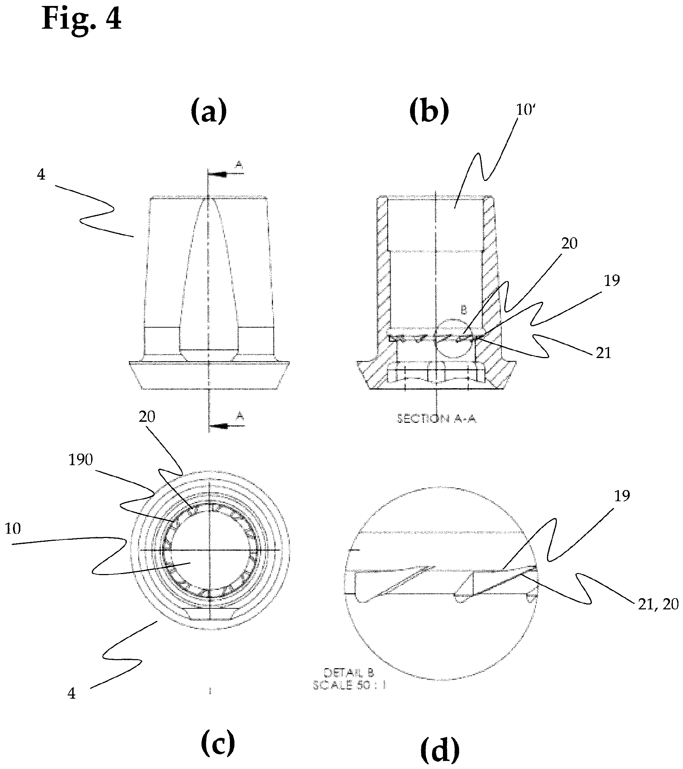

Figur 4 (a-d) zeigt eine weitere Ausführungsform eines Abutments 4 , welche beim erfindungsgemässen Zahnersatzsystem zum Einsatz kommt. In Figur 4(a) dargestellt ist eine Seitenansicht des Abutments 4. Figur 4(b) zeigt eine Schnittdarstellung durch das Abutment 4 entlang der Achse A-A gemäss Figur 4(a). Dargestellt ist eine besondere Ausführungsform einer Durchgangsbohrung 10'. Die Durchgangsbohrung 10', welche eine Verbindungsschraube zur Befestigung des Abutments 4 in einem Implantat aufnimmt, weist eine in der Durchgangsbohrung 10' liegende umlaufende Struktur 19 auf, welche Vorsprünge 20 aufweist. In der in Figur 4 dargestellten Ausführungsform ist die Struktur 1 9 einstückig mit dem Abutment 4 ausgebildet.

In der Endposition liegt der Schraubenkopf auf der Struktur 19 auf. Die ersten Formschlussmittel, angebracht am Schraubenkopf rasten in dieser Position in die Vorsprünge 20 vollständig ein (in Figur 4 nicht gezeigt). Eine Schraubensicherung 80 wird gebildet und eine ungewollte Lockerung sowie ein Verlust an Vorspannkraft der Verbindungsschraube wird verhindert. In der in Figur 4b-d gezeigten besonderen Ausführungsform sind die Vorsprünge 20 als Zähne 21 ausgebildet. In Figur 4(c) ist das Abutment 4 aus Figur 4b in einer Ansicht von oben dargestellt. Gezeigt ist die Durchgangsbohrung 10' mit der umlaufenden Struktur 19 mit den Kraftschlusselementen 20. Wie in Figur 4b, ist die Verbindungsschraube, welche in die Durchgangsbohrung eingeführt wird nicht gezeigt. In Figur 4d ist ein Ausschnitt der Vorsprünge 20 ausgeführt als Zähne 21, in einer seitlichen Ansicht, dargestellt.

Figuren 5a-c zeigen verschiedene Ansichten einer weiteren Ausführungsform eines Abutments 5, wie es beim erfindungsgemässen Zahnersatzsystem zum Einsatz kommt. In Figur 5a ist das Abutment 5 in einer perspektivischen Ansicht von oben gezeigt. Das Abutment 5 weist eine Durchgangsbohrung 10" mit zweiten Formschlusselementen 6 auf, in welche erste Formschlusselemente 6' angeordnet am Schraubenkopf, in einer Endposition vollständig einrasten (siehe Figur 5c). In dieser Position liegt der Schraubenkopf an einem an einer Innenseite der Durchgangsbohrung umlaufenden Schulter 71' auf.

In einer bevorzugten Ausführungsform sind die ersten und zweiten Formschlusselemente 6', 6 durch Rippen und Nuten gebildet. Die Nuten verlaufen an einer Innenfläche der Durchgangsbohrung 10" in Längsichtung. Beim Anlegen eines Drehmoments und bei Erreichen des gewünschten Anziehmoments rasten die ersten Formschlussmittel 6', ausgebildet als Rippen 62 am Schraubenkopf 7" in die Nuten 61 ein und bilden auf diese Weise eine Schraubensicherung 90. Die Verbindungsschraube 7" ist auf diese Weise gegen eine ungewollte Lockerung abgesichert und ein Verlust an Vorspannkraft kann verhindert werden. Figur 5(b) zeigt das Abutment 5 mit Durchgangsbohrung 10" und einer Mehrzahl in Längsrichtung verlaufender Nuten 61 in einer Schnittdarstellung. Figur 5(c) stellt das Abutment 5 mit in die Durchgangsbohrung 10" eingeführter Verbindungsschraube dar, sowie eine Detailansicht die eine einzelne Rippe 62 in einer eingerasteten Position.

Figur 6(a) zeigt eine perspektivische Ansicht des erfindungsgemässen Zahnersatzsystems mit dem Abutment 5 aus Figur 5. Figur 6(b) offenbart eine exemplarische Ausführungsform einer Verbindungsschraube 7", wie sie in Verbindung mit dem Abutment 5 aus Figur 6(a) zum Einsatz kommt. Am Kopf der Schraube 7" sind eine Mehrzahl von ersten Formschlussmitteln 6', in Form von Rippen 62 angeordnet. In der exemplarischen Ausführungsform gemäss Figur 6b ist im Anschluss an den Schraubenkopf ein Passzylinder 15" und ein den Passzylinder überlappendes Aussengewinde 17" gezeigt. Am proximalen Ende befindet sich ein zylindrisches Abschlusselement 22. Figur 6c zeigt die Verbindungsschraube aus Figur 6b in einer Ansicht von oben, umfassend einen Schlüsselangriff 23 für einen Drehschlüssel.

Figur 7(a) zeigt eine weitere Ausführungsform einer Verbindungsschraube 7'" und Figur 7(b) offenbart eine beispielhafte Ausführungsform des erfindungsgemässen Zahnersatzsystems in einer Schnittdarstellung, bei der die Schraube 7'" aus Figur 7(a) zum Einsatz kommt. Im Unterschied zur Ausführungsform aus der Figur 6 verlaufen die Nuten 61' bzw. Rippen 62' der äusseren Umlauffläche des Schraubenkopfs 71 bzw. der inneren Umlauffläche der Durchgangsbohrung 10'". im Wesentlichen wendeiförmig. Die Wendel weist einen steilen Neigungswinkel auf, welcher steiler ist als die Steigung des Aussengewindes 17'" der Verbindungsschraube. Bedingt durch diesen Verlauf, zieht sich die Schraube automatisch weiter fest, wenn das Zahnersatzsystem auf Zug beansprucht wird.

In einer Endposition liegt der Schraubenkopf an einem an einer Innenseite der Durchgangsbohrung umlaufenden Schulter 71" auf und die Rippen 62' rasten in die Nuten 61" der inneren Umlauffläche der Durchgangsbohrung 10'" vollständig ein. Bedingt durch die Fertigung der Schraube aus einem thermoplastischen faserverstärkten Material, kommt es beim Anlegen des Drehmoments an die Schraube zu einer elastischen Verformung der Nuten bzw. Federn.

Figur 8 zeigt ein Diagramm mit dem den Verlauf des Anzieh-, bzw. des Lösemoments (Drehmoment) in Abhängigkeit vom Drehwinkel beim Festziehen bzw. beim Lösen der Verbindungsschraube (vgl. beispielsweise Ausführungsform nach Fig. 1, Fig. 2 und Fig. 3) . Das Anziehmoment ist an der positiven y-Achse dargestellt. Das Moment zum Lösen an der negativen y-Achse.

Die mit einer durchgezogenen Linie gekennzeichnete Kurve, stellt den Verlauf des Drehmoments dar, wobei die Schraubensicherung als Verbindungsschraube mit einem ersten Formschlussmittel ausgeführt als Aussensechskant und das zweiten Formschlussmittel als Innendreikant im Implantat ausgebildet ist (vgl. beispielsweise Ausführungsform nach Fig. 1, Fig. 2 und Fig. 3). Bezogen auf diese Ausführungsform, nimmt in Abhängigkeit des Drehwinkels (x-Achse) der Verbindungsschraube das aufgebrachten Drehmoments (y-Achse) beim Anziehen bzw. Lösen einen "wellenförmigen" Verlauf an. Befindet sich der Aussensechskant in einem einem Drehwinkel zum Innendreikant in welchem die Kantenbereich des Aussensechskants durch die Seitenflächen des Innendreikants komprimiert werden, steigt das aufzubringende Drehmoment an. Beim weiteren Drehen der Verbindungsschraube setzt sich der Anstieg bis zu einem Maximum fort. Wird ein Drehwinkel erreicht, in dem die Aussenflächen des Aussenmehrkants im wesentlich parallel zum den Flächen des Innenmehrkants stehen, fällt das Drehmoment ab, der Aussenmehrkant entspannt und rastet der Endposition vollständig in den Innenmehrkant ein. Die Verbindungsschraube wird solange gedreht bis ein maximales gewünschtes Anziehmoment, im vorliegenden Fall 30 Ncm (0.3 Nm) erreicht ist. Kurz nach Erreichen dieses Anziehmoments entspannt der Aussenmehrkant und rastet in einer Endposition in den Innendreikant ein.

In Figur 8 ist entlang der negativen y-Achse der Verlauf des Drehmoments beim Lösen der Verbindungsschraube aufgezeigt. Aus diesem Kurvenverlauf geht hervor, dass das Drehmoment welches zum Initialen Lösen der Verbindungsschraube erforderlich ist, grösser ist als bei einer Verbindungsschraube ohne Schraubensicherung. Im vorliegenden Fall sind rund 40 Ncm (0.4 Nm) erforderlich um die Verbindungsschraube aus der Endposition heraus zu drehen. Bei der Schraube ohne eine Schraubensicherung liegt dieser Wert unter 30 Ncm (0.3 Nm). Das "Delta X" wie in Figur 8 dargestellt, repräsentiert die Differenz zwischen den Scheitelpunkten des Kurvenverlaufs mit und ohne Schraubensicherung und untermauert den gewünschten Effekt, welcher mit dem erfindungsgemässen Zahnersatzsystem erzielt werden soll. Ein ungewolltes Lösen der Verbindungsschraube und damit ein Lockern des erfindungsgemässen Zahnersatzsystems kann zuverlässig verhindert werden. Wie auch beim Anziehen der Verbindungsschrauben verläuft das Lösemoment ebenfalls "wellenförmig" . Je nach Drehwinkel und dem Zusammenwirken mit dem Innenmehrkant erfolgt das Komprimieren bzw. Entspannen des Aussenmehrkants.

Im Vergleich zeigt die unterbrochene Linie den Verlauf des Drehmoments in Abhängigkeit des Drehwinkels, einer Verbindungsschraube ohne Schraubensicherung. Anstatt des Aussensechskants als erstes Formschlussmittel, wies die Verbindungsschraube ein zylindrisches Element auf. Anhand des Kurvenverlaufs ist ersichtlich, dass es zu keiner elastischen Verformung einer Kompression bzw. einem Entspannen des zylindrischen Elements kommt, wenn dieses mit dem Innendreikant zusammen wirkt. Die Kurve steigt im Wesentlichen exponentiell bis zum Erreichen des gewünschten maximalen Anziehmoments, beispielsweise 35 Ncm (0.35 Nm) an. Wie aus dem Kurvenverlauf im negativen Bereich der y-Achse ersichtlich ist, ist das Drehmoment welches zum Lösen der Verbindungsschraube erforderlich ist, wesentlich kleiner als jenes einer schrauben mit Sicherung. Der Einsatz dieser Art von Verbindungsschrauben ist nachteilig, da es über die Tragedauer des Zahnersatzsystems hinweg zur Lockerung der Verbindungsschraube und daher es Abutments kommen kann.

Figur 9 dient zur näheren Erläuterung der Formel zur Berechung des Aussenkreisradius ($r_{ak}$) und des Innenkreisradius ($r_{ik}$) eines schematisch dargestellten Sechskants, welcher in einem Dreikant angeordnet ist. Bei dem dargestellten Sechskant nimmt der Wert für α (alpha) 30 Grad an. Figur 9 bezieht sich auf die in Figur 1 erläuterte Ausführungsform.

Bezeichnungsliste

Implantat 1,1'

Abutment 2, 3, 4, 5, 5'

Zweite Formschlusselemente 6

Erste Formschlusselemente 6'

Verbindungsschraube 7, 7', 7", 7'''

Durchgangsbohrung 10, 10', 10"

Aussenmehrkant 11, 11'

Schraubenkopf 12, 71

Innenmehrkant 13, 13'

Aufnahmeöffnung 14

Passzylinder 15, 15', 15"

Abschnitt 16

Aussengewinde 17, 17', 17", 17'''

Passzylinderbohrung 18

Sekundärteil 180

Innengewinde 32

Struktur 19

Vorsprünge 20

Zähne 21

Rippen 62, 62'

Nuten 61, 61'

Schraubensicherung 60, 70, 80, 90, 100

Schulter 71

Abutmentschulter 81

**Patentansprüche**

1. Zahnersatzsystem umfassend ein Keramikimplantat (1, 1') zur Osseointegration in einem Kieferknochen mit einer Aufnahmeöffnung (14, 14') für eine Verbindungsschraube (7, 7', 7", 7'''), eine Verbindungsschraube, ein Abutment (2, 3, 4, 5, 5'), vorzugsweise aus Keramik, wobei das Abutment (2, 3, 4, 5, 5') mittels der Verbindungsschraube (7, 7', 7", 7''') aus faserverstärktem Thermoplast in der Aufnahmeöffnung (14, 14') des Implantats (1) befestigbar ist, eine Schraubensicherung (60, 70, 80, 90, 100), die ein erstes Formschlussmittel (11, 11', 6', 61') und ein zweites Formschlussmittel (13, 12', 20, 6, 62') umfasst, wobei das erste Formschlussmittel (11, 11', 6', 61') an der Verbindungsschraube (7, 7', 7", 7'''), das zweite Formschlussmittel (13, 12', 20, 6, 62') in der Aufnahmeöffnung (14, 14') des Implantats (1, 1') oder am Abutment (2, 3, 4, 5, 5') angeordnet ist und beim Anziehen oder Lösen der Verbindungsschraube (7, 7', 7", 7''') im Implantat (1, 1') das erste Formschlussmittel (11, 11', 6', 61') im Zusammenwirken mit dem zweiten Formschlussmittel (13, 12', 20, 6, 62') elastisch verformbar ist, wobei das erste Formschlussmittel als ein Aussenmehrkant an der Verbindungsschraube (7, 7', 7", 7''') und das zweite Formschlussmittel als ein Innenmehrkant (13, 13'), vorzugsweise Dreikant, in der Aufnahmeöffnung (14, 14') des Implantats (1, 1') ausgebildet ist, oder das erste Formschlussmittel mindestens eine Rippe (62, 62') an einem Kopf (12, 71) der Verbindungsschraube umfasst und das zweite Formschlussmittel mindestens eine Nut (61, 61') in einer Durchgangsbohrung (10, 10', 10") des Abutments (2, 3, 4, 5, 5') umfasst, oder das zweite Formschlussmittel eine an einer inneren Umlauffläche der Durchgangsbohrung (10') des Abutments angeordnete Struktur (19) ist, wobei die Struktur (19) Vorsprünge (20) aufweist und korrespondierende erste Formschlussmittel sich an einem Kopf (12, 71) der Verbindungsschraube befinden.

2. Zahnersatzsystem nach Anspruch 1, **dadurch gekennzeichnet, dass** das erste Formschlussmittel (11, 11', 6', 61') im Zusammenwirken mit dem zweiten Formschlussmittel (13, 12', 20, 6, 62') beim Anziehen oder Lösen der Verbindungsschraube (7, 7', 7", 7''') entsprechend komprimierbar und entspannbar ist.

3. Zahnersatzsystem nach Anspruch 2, **dadurch gekennzeichnet, dass** das erste Formschlussmittel (11, 1 1', 6', 61') relativ zum zweiten Formschlussmittel (13, 12', 20, 6, 62') drehbar ist, beim Erreichen einer ersten Drehposition im Zusammenwirken mit dem zweiten Formschlussmittel (13, 12', 20, 6, 62') komprimierbar und beim Erreichen einer zweiten Drehposition entspannbar ist und in einer Endposition das erste Formschlussmittel (11, 11', 6, 6') in das zweite Formschlussmittel vollständig einrastet.

4. Zahnersatzsystem nach Anspruch 1, **dadurch gekennzeichnet, dass** der Aussenmehrkant (11, 11') an der Verbindungsschraube (7, 7', 7", 7''') an einem Schraubenende, gegenüberliegend zum Schraubenkopf (12, 71) angeordnet ist.

5. Zahnersatzsystem nach Anspruch 1, **dadurch gekennzeichnet, dass** die mindestens eine Rippe (62, 62') an einer äusseren Umlauffläche des Schraubenkopfes der Verbindungsschraube (7", 7''') und die mindestens eine Nut (61, 61') an einer inneren Umlauffläche der Durchgangsbohrung (10", 10''') angeordnet ist.

6. Zahnersatzsystem nach Anspruch 5, **dadurch gekennzeichnet, dass** die Rippen (62') und die Nuten (61') wendelförmig verlaufen.

7. Zahnersatzsystem nach Anspruch 1 oder 5 , **dadurch gekennzeichnet, dass** die mindestens eine Rippe (62) in axialer Richtung zu einer Vertikalachse der Verbindungsschraube (7") und die mindestens eine Nut (61) in axialer Richtung zu einer Vertikalachse des Abutments (5) parallel verläuft.

8. Zahnersatzsystem nach einem der Ansprüche 1 bis 3, **dadurch gekennzeichnet, dass** das Abutment (3) und die Verbindungsschraube (7') einstückig, aus faserverstärktem Thermoplast, ausgebildet sind.

9. Zahnersatzsystem nach einem der Ansprüche 1 bis 8, **dadurch gekennzeichnet, dass** der faserverstärkte Thermoplast Verstärkungsfasern ausgewählt aus einer Gruppe bestehend aus: Kohlefaser, Aramidfaser, Glasfaser, Carbon Nano Tubes oder Kombinationen daraus aufweist.

10. Zahnersatzsystem nach Anspruch 9, **dadurch gekennzeichnet, dass** der faserverstärkte Thermoplast aus unidirektionalen Kohlefasern in einer PEEK-Matrix besteht.

11. Zahnersatzsystem nach einem der Ansprüche 1 bis 10, **dadurch gekennzeichnet, dass** das Keramikimplantat (1, 1') eine Aufnahmeöffnung (14, 14') aufweist, ein Abschnitt der Aufnahmeöffnung (14, 14') als eine Passzylinderbohrung (31) ausgebildet ist, wobei die Passzylinderbohrung (31) in axialer Richtung zur Rotationsachse der Passzylinderbohrung (31) von einem Innengewinde (32) überlappt wird, die Verbindungsschraube (7, 7', 7'', 7''') einen zur Passzylinderbohrung (31) korrespondierenden Passzylinder (31') und ein zum Innengewinde (32) korrespondierendes Aussengewinde (32') aufweist, sodass zwischen Verbindungsschraube (7, 7', 7'', 7''') und Aufnahmeöffnung (14, 14') ein Passsitz und eine Gewindeverbindung gebildet wird.

12. Zahnersatzsystem nach Anspruch 11, **dadurch gekennzeichnet, dass** die Passzylinderbohrung (31) einen zylindrischen Anteil von 20% bis 50%, gemessen an der zylindrischen Mantelfläche der Passzylinderbohrung (31) aufweist.

## Claims

1. Dental prosthesis system comprising a ceramic implant (1, 1') for osseointegration in a jaw bone, with a receiving opening (14, 14') for a connection screw (7, 7', 7'', 7'''), a connection screw, an abutment (2, 3, 4, 5, 5'), preferably of ceramic, wherein the abutment (2, 3, 4, 5, 5') is securable in the receiving opening (14, 14') of the implant (1) by means of the connection screw (7, 7', 7'', 7''') made of fibre-reinforced thermoplastic, a screw lock (60, 70, 80, 90, 100), which comprises a first interlocking means (11, 11', 6', 61') and a second interlocking means (13, 12', 20, 6, 62'), wherein the first interlocking means (11, 11', 6', 61') is arranged on the connection screw (7, 7', 7'', 7'''), the second interlocking means (13, 12', 20, 6, 62') is arranged in the receiving opening (14, 14') of the implant (1, 1') or on the abutment (2, 3, 4, 5, 5'), and, during the tightening or releasing of the connection screw (7, 7', 7'', 7''') in the implant (1, 1'), the first interlocking means (11, 11', 6', 61') is elastically deformable in cooperation with the second interlocking means (13, 12', 20, 6, 62'), wherein the first interlocking means is designed as an outer polygon on the connection screw (7, 7', 7'', 7''') and the second interlocking means is designed as an inner polygon (13, 13'), preferably a triangle, in the receiving opening (14, 14') of the implant (1, 1'), or the first interlocking means comprises at least one rib (62, 62') on a head (12, 71) of the connection screw and the second interlocking means comprises at least one groove (61, 61') in a through-bore (10, 10', 10'') of the abutment (2, 3, 4, 5, 5'), or the second interlocking means is a structure (19) arranged on an inner peripheral surface of the through-bore (10') of the abutment, wherein the structure (19) has protrusions (20), and corresponding first interlocking means are located on a head (12, 71) of the connection screw.

2. Dental prosthesis system according to Claim 1, **characterized in that** the first interlocking means (11, 11', 6', 61') in cooperation with the second interlocking means (13, 12', 20, 6, 62') can be compressed or relaxed accordingly during the tightening or releasing of the connection screw (7, 7', 7'', 7''').

3. Dental prosthesis system according to Claim 2, **characterized in that** the first interlocking means (11, 11', 6', 61') is rotatable relative to the second interlocking means (13, 12', 20, 6, 62'), can be compressed in interaction with the second interlocking means (13, 12', 20, 6, 62') when a first rotary position is reached and can be relaxed when a second rotary position is reached, and the first interlocking means (11, 11', 6, 6') fully latches in the second interlocking means in an end position.

4. Dental prosthesis system according to Claim 1, **characterized in that** the outer polygon (11, 11') is arranged on the connection screw (7, 7', 7'', 7''') at a screw end opposite the screw head (12, 71) .

5. Dental prosthesis system according to Claim 1, **characterized in that** the at least one rib (62, 62') is arranged on an outer peripheral surface of the head of the connection screw (7'', 7''') and the at least one groove (61, 61') is arranged on an inner peripheral surface of the through-bore (10'', 10''').

6. Dental prosthesis system according to Claim 5, **characterized in that** the ribs (62') and the grooves (61') run helically.

7. Dental prosthesis system according to Claim 1 or 5, **characterized in that** the at least one rib (62) runs in an axial direction parallel to a vertical axis of the connection screw (7") and the at least one groove (61) runs in an axial direction parallel to a vertical axis of the abutment (5).

8. Dental prosthesis system according to one of Claims 1 to 3, **characterized in that** the abutment (3) and the connection screw (7') are formed integrally from fibre-reinforced thermoplastic.

9. Dental prosthesis system according to one of Claims 1 to 8, **characterized in that** the fibre-reinforced thermoplastic has reinforcement fibres chosen from a group consisting of: carbon fibres, aramid fibres, glass fibres, carbon nanotubes, or combinations thereof.

10. Dental prosthesis system according to Claim 9, **characterized in that** the fibre-reinforced thermoplastic is composed of unidirectional carbon fibres in a PEEK matrix.

11. Dental prosthesis system according to one of Claims 1 to 10, **characterized in that** the ceramic implant (1, 1') has a receiving opening (14, 14'), a portion of the receiving opening (14, 14') is designed as a cylindrical form-fit bore (31), wherein the cylindrical form-fit bore (31) is overlapped by an internal thread (32) in an axial direction with respect to the rotation axis of the cylindrical form-fit bore (31), the connection screw (7, 7', 7'', 7''') has a form-fit cylinder (31') corresponding to the cylindrical form-fit bore (31) and an external thread (32') corresponding to the internal thread (32), such that a form fit and threaded connection is formed between connection screw (7, 7', 7'', 7''') and receiving opening (14, 14').

12. Dental prosthesis system according to Claim 11, **characterized in that** the cylindrical form-fit bore (31) has a cylindrical proportion of from 20% to 50%, measured at the cylindrical lateral surface of the cylindrical form-fit bore (31).

**Revendications**

1. Système de prothèse dentaire, comprenant un implant en céramique (1, 1') pour l'ostéo-intégration dans un os maxillaire, comprenant une ouverture de réception (14, 14') pour une vis de connexion (7, 7', 7'', 7'''), une vis de connexion, un pilier (2, 3, 4, 5, 5'), de préférence en céramique, le pilier (2, 3, 4, 5, 5') pouvant être fixé au moyen de la vis de connexion (7, 7', 7'', 7''') en matière thermoplastique renforcée par des fibres dans l'ouverture de réception (14, 14') de l'implant (1), une fixation de vis (60, 70, 80, 90, 100) qui comprend un premier moyen d'engagement positif (11, 11', 6', 61) et un deuxième moyen d'engagement positif (13, 12', 20, 6, 62'), le premier moyen d'engagement positif (11, 11', 6', 61') étant disposé au niveau de la vis de connexion (7, 7', 7'', 7'''), le deuxième moyen d'engagement positif (13, 12', 20, 6, 62') étant disposé dans l'ouverture de réception (14, 14') de l'implant (1, 1') ou au niveau du pilier (2, 3, 4, 5, 5') et lors du serrage ou du desserrage de la vis de connexion (7, 7', 7'', 7''') dans l'implant (1, 1'), le premier moyen d'engagement positif (11, 11', 6', 61') pouvant être déformé élastiquement par coopération avec le deuxième moyen d'engagement positif (13, 12', 20, 6, 62'), le premier moyen d'engagement positif étant réalisé sous la forme d'un polygone extérieur au niveau de la vis de connexion (7, 7', 7'', 7''') et le deuxième moyen d'engagement positif étant réalisé sous la forme d'un polygone intérieur (13, 13'), de préférence un triangle, dans l'ouverture de réception (14, 14') de l'implant (1, 1'), ou le premier moyen d'engagement positif comprenant au moins une nervure (62, 62') au niveau d'une tête (12, 71) de la vis de connexion et le deuxième moyen d'engagement positif comprenant au moins une rainure (61, 61') dans un alésage traversant (10, 10', 10'') du pilier (2, 3, 4, 5, 5'), ou le deuxième moyen d'engagement positif étant une structure (19) disposée au niveau d'une surface périphérique intérieure de l'alésage traversant (10') du pilier, la structure (19) présentant des saillies (20) et des premiers moyens d'engagement positif correspondants se trouvant au niveau d'une tête (12, 71) de la vis de connexion.

2. Système de prothèse dentaire selon la revendication 1, **caractérisé en ce que** le premier moyen d'engagement positif (11, 11', 6', 61'), par coopération avec le deuxième moyen d'engagement positif (13, 12', 20, 6, 62'), lors du serrage ou du desserrage de la vis de connexion (7, 7', 7'', 7'''), pouvant être comprimé et détendu de manière correspondante.

3. Système de prothèse dentaire selon la revendication 2, **caractérisé en ce que** le premier moyen d'engagement positif (11, 11', 6', 61') peut tourner par rapport au deuxième moyen d'engagement positif (13, 12', 20, 6, 62'), peut être comprimé, une fois qu'il a atteint une première position de rotation, par coopération avec le deuxième moyen d'engagement positif (13, 12', 20, 6, 62') et peut être détendu une fois qu'il a atteint une deuxième position de rotation et, dans une position finale, le premier moyen d'engagement positif (11, 11', 6, 6') s'emboîte complètement dans le deuxième moyen d'engagement positif.

4. Système de prothèse dentaire selon la revendication 1, **caractérisé en ce que** le polygone extérieur (11, 11') est disposé au niveau de la vis de connexion (7, 7', 7'', 7''') à une extrémité de la vis, à l'opposé à la tête de vis (12, 71).

5. Système de prothèse dentaire selon la revendication 1, **caractérisé en ce que** l'au moins une nervure (62, 62') est disposée au niveau d'une surface périphérique extérieure de la tête de vis de la vis de connexion (7'', 7''') et l'au moins une rainure (61, 61') est disposée au niveau d'une surface périphérique intérieure de l'alésage traversant (10'', 10''').

6. Système de prothèse dentaire selon la revendication 5, **caractérisé en ce que** les nervures (62') et les rainures (61') s'étendent sous forme ondulée.

7. Système de prothèse dentaire selon la revendication 1 ou 5, **caractérisé en ce que** l'au moins une nervure (62) s'étend dans la direction axiale parallèlement à un axe vertical de la vis de connexion (7'') et l'au moins une rainure (61) s'étend dans la direction axiale parallèlement à un axe vertical du pilier (5).

8. Système de prothèse dentaire selon l'une quelconque des revendications 1 à 3, **caractérisé en ce que** le pilier (3) et la vis de connexion (7') sont réalisés d'une seule pièce en matière thermoplastique renforcée par des fibres.

9. Système de prothèse dentaire selon l'une quelconque des revendications 1 à 8, **caractérisé en ce que** la matière thermoplastique renforcée par des fibres comprend des fibres de renforcement choisies dans un groupe constitué: de fibres de carbone, de fibres d'aramide, de fibres de verre, de nanotubes de carbone ou de combinaisons de ceux-ci.

10. Système de prothèse dentaire selon la revendication 9, **caractérisé en ce que** la matière thermoplastique renforcée par des fibres se compose de fibres de carbone unidirectionnelles dans une matrice de PEEK.

11. Système de prothèse dentaire selon l'une quelconque des revendications 1 à 10, **caractérisé en ce que** l'implant en céramique (1, 1') présente une ouverture de réception (14, 14'), une portion de l'ouverture de réception (14, 14') est réalisée sous forme d'alésage cylindrique d'ajustement (31), l'alésage cylindrique d'ajustement (31) étant recouvert par un filetage intérieur (32) dans la direction axiale par rapport à l'axe de rotation de l'alésage cylindrique d'ajustement (31), la vis de connexion (7, 7', 7'', 7''') présentant un cylindre d'ajustement (31') correspondant à l'alésage cylindrique d'ajustement (31) et un filetage extérieur (32') correspondant au filetage intérieur (32), de telle sorte qu'entre la vis de connexion (7, 7', 7'', 7''') et l'ouverture de réception (14, 14') soient formés un ajustement serré et une connexion filetée.

12. Système de prothèse dentaire selon la revendication 11, **caractérisé en ce que** l'alésage cylindrique d'ajustement (31) présente une proportion cylindrique de 20 % à 50 % mesurée au niveau de la surface d'enveloppe cylindrique de l'alésage cylindrique d'ajustement (31).

# Fig. 1

SECTION A-A

**(a)**                    **(b)**

SECTION B-B

**(c)**

# Fig. 2

(b)

(a)

# Fig. 3

(a)

(b)

(c)

# Fig. 4

## (a)

4

A

A

## (b)

10'

20

19

21

SECTION A-A

## (c)

20

190

10

4

## (d)

19

21, 20

DETAIL B
SCALE 50 : 1

# Fig. 5

**(a)**

**(b)**

SECTION A-A

**(c)**

# Fig. 6

(a)

(b)

(c)

# Fig. 7

(a)

(b)

# Fig. 8

# Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 214091346 A2
- EP 2522300 A
- US 20030224331 A1